# EUROPEAN PATENT APPLICATION

(11) **EP 4 593 507 A1**
(43) Date of publication of application: **30.07.2025**
(21) Application number: 22959162.3
(22) Date of filing: 22.09.2022
(51) Int. Cl.: H04W 74/08

(54) **REPORTING METHOD, APPARATUS AND DEVICE, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2022/120672
(87) International publication number: WO 2024/060154

(57) **Abstract**

Provided in the present disclosure are a reporting method, apparatus and device, and a storage medium. The method comprises: reporting indication information to a network device, wherein the indication information is used for indicating, to the network device, whether a terminal device is configured with a configuration related to listen-before-talk (LBT) failure recovery. By means of the method of the present disclosure, a network device can perform accurate analysis to locate a random access problem, thereby ensuring accurate and targeted optimization of a random access process, and increasing the success rate of the random access process.

## Description

### TECHNICAL FIELD

The disclosure relates to the field of communication technology, in particular to a reporting method/apparatus/device and a storage medium.

### BACKGROUND

In communication systems, terminals generally obtains a count value of preamble transmitting failures during a random access procedure, and reports the count value to a network device, which enables the network device to analyze and locate a random access problem based on the count value for subsequent optimization of the random access procedure.

In the related arts, a count manner for the count value of the preamble transmitting failures in a case that the terminal device is not configured with a listen-before-talk (LBT) failure recovery configuration is not the same as a count manner for the count value of the preamble transmitting failures in a case that the terminal device is configured with the LBT failure recovery configuration. In a case that the terminal device is configured with the LBT failure recovery configuration, a preamble transmitting failure resulted by a LBT failure does not lead to an increase of a preamble transmission counter, PREAMBLE_TRANSMISSION_COUNTER, value, that is, the count value of the preamble transmitting failures resulted by the LBT failure does not change. In a case that the terminal device is not configured with the LBT failure recovery configuration, the preamble transmitting failure resulted by the LBT failure leads to an increase of the PREAMBLE_TRANSMISSION_COUNTER value, that is, the count value of the preamble transmitting failures resulted by the LBT failure will change.

However, in the related arts, the network device cannot know which count manner is used by the terminal device to obtain the count value of the preamble transmitting failures, which may affect an accuracy of analysis and locating of the network device in locating the random access problem based on the count value of the preamble transmitting failures reported by terminal device, results in an inability to accurately analyze and locate the random access problem, and further results in the inability to accurately optimize the random access procedure subsequently.

### SUMMARY

The present disclosure provides a reporting method/apparatus/device and a storage medium, capable of solving the technical problem in the related arts of inability to accurately optimize the random access procedure resulted by that the network device cannot know which count manner is used by the terminal device to obtain the count value of the preamble transmitting failures.

In a first aspect, embodiments of the present disclosure provide a reporting method. The method is performed by a terminal and includes:
reporting indication information to a network device, in which, the indication information indicates to the network device whether the terminal is configured with a configuration relating to listen-before-talk (LBT) failure recovery.

In the disclosure, the terminal reports the indication information to the network device, and the indication information indicates to the network device whether the terminal is configured with the configuration relating to LBT failure recovery. Thus, the network device may determine a count manner of the terminal for a count value of preamble transmitting failures based on "whether the terminal is configured with the configuration relating to LBT failure recovery". Then, in a case that the network device subsequently analyzes and locates the random access problem based on the count value of the preamble transmitting failures reported by the terminal, the network device may accurately analyze and locate the random access problem based on the count manner of the terminal for the count value of preamble transmitting failures together with the count value of the preamble transmitting failures reported by the terminal. Therefore, accurate optimization for the random access procedure may be guaranteed and a success rate of the random access procedure may be improved.

Optionally, reporting the indication information to the network device includes:
reporting to the network device indication information explicitly indicating whether the terminal is configured with the configuration relating to LBT failure recovery.

Optionally, the method further comprising: in response to the terminal being configured with the configuration relating to LBT failure recovery, reporting the indication information to the network device, the indication information comprising a content that the terminal is configured with the configuration relating to LBT failure recovery;
in response to the terminal not being configured with the configuration relating to LBT failure recovery, not reporting indication information to the network device.

Optionally, the method further comprising: in response to the terminal device being configured with the configuration relating to LBT failure recovery, reporting the indication information to the network device, in which, the indication information further indicates whether the terminal detects continued LBT failures;
in response to the terminal not being configured with the configuration relating to LBT failure recovery, not reporting indication information to the network device.

Optionally, reporting the indication information to the network device comprises:
in response to the terminal being in a predetermined situation, reporting the indication information to the network device, in which the predetermined situation comprises at least one of followings:
the terminal being in random access failure while in a connected state;
the terminal being in random access success while in a connected state;
the terminal being in handover failure;
the terminal being in secondary cell group (SCG) addition failure;
the terminal being in SCG addition success;
the terminal being in SCG change failure;
the terminal being in SCG change success;
the terminal being in handover success;
the terminal being in SCG activation failure; or
the terminal being in random access procedure termination due to continued LBT failures.

Optionally, in response to the terminal terminating the random access procedure due to the continued LBT failures, the indication information reported by the terminal further indicates at least one of:
bandwidth part (BWP) related information associated with resources used in the terminated random access procedure;
random access information common, RA-InformationCommon, corresponding to the terminated random access procedure; or
a random access information list, perRAInfoList, corresponding to the terminated random access procedure.

Optionally, reporting the indication information to the network device includes:
reporting the indication information to the network device in a case that the terminal initiates a random access procedure using unlicensed spectrum resources.

Optionally, pieces of indication information correspond one-to-one to random access procedures, and each piece of indication information indicates whether the terminal is configured with the configuration relating to LBT failure recovery in a case that the terminal device initiates a random access procedure corresponding to the indication information.

Optionally, reporting the indication information to the network device includes:
reporting the indication information to the network device by means of at least one of a random access report, a radio link failure (RLF) report, SCG failure information, a successful handover report, a successful primary secondary cell (PScell) addition report, and a successful PScell change report.

Optionally, the random access report is reported to the network device after the terminal device succeeds in random access;
in response to the terminal reporting the indication information to the network device by means of the random access report, in case of the terminal triggering a random access procedure multiple times due to continued LBT failures, the random access report further includes at least one of:
first information comprising information related to a BWP that has been attempted in the random access procedure for LBT failure recovery before the terminal succeeds in random access; or
second information comprising BWP related information of a previous LBT failure of an earliest random access procedure triggered due to the continued LBT failures.

Optionally, in response to the terminal reporting the indication information to the network device by means of at least one of the RLF report, the SCG failure information, the successful handover report, the successful PScell addition report, or the successful PScell change report, in case of the terminal experiencing continued LBT failures in a handover procedure, or a PScell addition procedure or a PScell change procedure, at least one of the RLF report, the SCG failure information, the successful handover report, the successful PScell addition report, or the successful PScell change report further includes third information, the third information includes information related to at least one BWP in which the continued LBT failures have been experienced during the handover procedure, the PScell addition procedure, or the PScell change procedure.

In a second aspect, embodiments of the present disclosure provide a reporting method. The method is performed by a network device, and includes:
receiving indication information reported by a terminal, in which, the indication information indicates to the network device whether the terminal is configured with a configuration relating to listen-before-talk (LBT) failure recovery.

Optionally, receiving the indication information reported by the terminal includes:
receiving indication information explicitly indicating whether the terminal is configured with the configuration relating to LBT failure recovery, reported by the terminal.

Optionally, the method further includes:
in response to the network device receiving the indication information, and the indication information including a content that the terminal is configured with the configuration relating to LBT failure recovery, determining that the terminal is configured with the configuration relating to LBT failure recovery;
in response to the network device failing to receive the indication information, determining that the terminal is not configured with the configuration relating to LBT failure recovery.

Optionally, the method further includes:
in response to the network device receiving the indication information, and the indication information further indicating whether the terminal detects continued LBT failures, determining that the terminal is configured with the configuration relating to LBT failure recovery;
in response to the network device failing to receive the indication information, determining that the terminal is not configured with the configuration relating to LBT failure recovery.

Optionally, the indication information is reported to the network device in response to the terminal being in a predetermined situation; the predetermined situation includes at least one of followings:
the terminal being in random access failure while in a connected state;
the terminal being in random access success while in a connected state;
the terminal being in handover failure;
the terminal being in secondary cell group (SCG) addition failure;
the terminal being in SCG addition success;
the terminal being in SCG change failure;
the terminal being in SCG change success;
the terminal being in handover success;
the terminal being in SCG activation failure; or
the terminal being in random access procedure termination due to continued LBT failure.

Optionally, in response to the terminal terminating the random access procedure due to the continued LBT failures, the indication information reported by the terminal further indicates at least one of:
BWP related information associated with resources used in the terminated random access procedure;
RA-InformationCommon corresponding to the terminated random access procedure; or
perRAInfoList corresponding to the terminated random access procedure.

Optionally, the indication information is reported to the network device in a case that the terminal initiates a random access procedure using unlicensed spectrum resources.

Optionally, pieces of indication information correspond one-to-one to random access procedures, and each piece of indication information indicates whether the terminal is configured with the configuration relating to LBT failure recovery in a case that the terminal device initiates a random access procedure corresponding to the indication information.

Optionally, receiving the indication information reported by the terminal includes:
receiving the indication information reported by the terminal by means of at least one of a random access report, a RLF report, SCG failure information, a successful handover report, a successful PScell addition report, or a successful PScell change report.

Optionally, in response to the indication information being reported to the network device by the terminal device by means of the random access report, the random access report further includes at least one of:
first information comprising information related to a BWP that has been attempted in the random access procedure for LBT failure recovery before the terminal succeeds in random access; or
second information comprising BWP related information of a previous LBT failure of an earliest random access procedure triggered due to the continued LBT failures.

Optionally, in response to the terminal reporting the indication information to the network device by means of at least one of the RLF report, the SCG failure information, the successful handover report, the successful PScell addition report, or the successful PScell change report, in case of the terminal experiencing continued LBT failures in a handover procedure, or a PScell addition procedure or a PScell change procedure, at least one of the RLF report, the SCG failure information, the successful handover report, the successful PScell addition report, or the successful PScell change report further includes third information, the third information includes information related to at least one BWP in which the continued LBT failures have been experienced during the handover procedure, the PScell addition procedure, or the PScell change procedure.

In a third aspect, embodiments of the disclosure provide a communication device. The communication device is configured in a terminal, and includes:
a transceiver module, configured to report indication information to a network device, in which, the indication information indicates to the network device whether the terminal is configured with a configuration relating to listen-before-talk (LBT) failure recovery.

In a fourth aspect, embodiments of the present disclosure provide a communication device. The communication device is configured in a network device, and includes:
a transceiver module, configured to receive indication information reported by a terminal, in which, the indication information indicates to the network device whether the terminal is configured with a configuration relating to listen-before-talk (LBT) failure recovery.

In a fifth aspect, embodiments of the disclosure provide a communication device. The communication device includes: a processor. When the processor calls a computer program stored in a memory, the method described in the first aspect above is implemented.

In a sixth aspect, embodiments of the disclosure provide a communication device. The communication device includes: a processor. When the processor calls a computer program stored in a memory, the method described in the second aspect above is implemented.

In a seventh aspect, embodiments of the disclosure provide a communication device. The communication device includes: a processor and a memory having a computer program stored thereon. The processor is configured to perform the computer program stored in the memory, causing the communication device to perform the method described in the first aspect above.

In an eighth aspect, embodiments of the disclosure provide a communication device. The communication device includes: a processor and a memory having a computer program stored thereon. The processor is configured to perform the computer program stored in the memory, causing the communication device to perform the method described in the second aspect above.

In a ninth aspect, embodiments of the disclosure provide a communication device. The communication device includes: a processor and an interface circuit. The interface circuit is configured to receive code instructions and transmit the code instructions to the processor. The processor is configured to run the code instructions to cause the device to perform the method described in the first aspect above.

In a tenth aspect, embodiments of the disclosure provide a communication device. The communication device includes: a processor and an interface circuit. The interface circuit is configured to receive code instructions and transmit the code instructions to the processor. The processor is configured to run the code instructions to cause the device to perform the method described in the second aspect above.

In an eleventh aspect, embodiments of the disclosure provide a communication system. The system includes the communication device of the third aspect and the communication device of the fourth aspect; or the system includes the communication device of the fifth aspect and the communication device of the sixth aspect; or the system includes the communication device of the seventh aspect and the communication device of the eighth aspect; or the system includes the communication device of the ninth aspect and the communication device of the tenth aspect.

In a twelfth aspect, embodiments of the disclosure provide a computer-readable storage medium. The computer-readable storage medium is configured to store instructions used by the above network device. When the instructions are executed, the terminal is caused to implement the method of any one aspect of the first aspect to the second aspect.

In a thirteenth aspect of the disclosure, a computer program product including a computer program is provided. The computer program, when run by a computer, causes the computer to implement the method of any one aspect of the first aspect to the second aspect.

In a fourteenth aspect of the disclosure, a chip system is provided. The chip system includes at least one processor and an interface for supporting the network device in realizing functions involved in the method of any one aspect of the first aspect to the second aspect, e.g., determining or processing at least one of data or information involved in the method described above. In a possible design, the chip system further includes a memory. The memory is configured to store necessary computer programs and data of source and secondary nodes. The chip system may consist of chips or may include a chip and other discrete devices.

In a fifteenth aspect of the disclosure, a computer program is provided. The computer program, when running on a computer, causes the computer to implement the method of any one aspect of the first aspect to the second aspect.

### BRIEF DESCRIPTION OF THE DRAWINGS

The above-mentioned and/or additional aspects and advantages of the present disclosure will be apparent and readily understood from the following description of embodiments taken in combination with the accompanying drawings, in which:
FIG. 1 is a structural diagram of a communication system provided by an embodiment of the disclosure.
FIG. 2 is a flowchart of a reporting method provided by an embodiment of the disclosure.
FIG. 3 is a flowchart of a reporting method provided by an embodiment of the disclosure.
FIG. 4 is a flowchart of a reporting method provided by an embodiment of the disclosure.
FIG. 5 is a flowchart of a reporting method provided by an embodiment of the disclosure.
FIG. 6 is a flowchart of a reporting method provided by an embodiment of the disclosure.
FIG. 7 is a flowchart of a reporting method provided by an embodiment of the disclosure.
FIG. 8 is a flowchart of a reporting method provided by an embodiment of the disclosure.
FIG. 9 is a flowchart of a reporting method provided by an embodiment of the disclosure.
FIG. 10 is a flowchart of a reporting method provided by an embodiment of the disclosure.
FIG. 11 is a flowchart of a reporting method provided by an embodiment of the disclosure.
FIG. 12 is a flowchart of a reporting method provided by an embodiment of the disclosure.
FIG. 13 is a flowchart of a reporting method provided by an embodiment of the disclosure.
FIG. 14 is a flowchart of a reporting method provided by an embodiment of the disclosure.
FIG. 15 is a flowchart of a reporting method provided by an embodiment of the disclosure.
FIG. 16 is a structural diagram of a communication device provided by an embodiment of the disclosure.
FIG. 17 is a structural diagram of a communication device provided by another embodiment of the disclosure.
FIG. 18 is a block diagram of a communication device provided by an embodiment of the disclosure.
FIG. 19 is a structural diagram of a chip provided by another embodiment of the disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with embodiments of the disclosure. Instead, they are merely examples of apparatuses and methods consistent with aspects r elated to the disclosure as recited in the appended claims.

The terms used in the disclosure are only for the purpose of describing specific embodiments, and are not intended to limit embodiments of the disclosure. The singular forms of "a" and "the" used in the disclosure are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in embodiments of the disclosure to describe various types of information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the terms "if" and "in case of" as used herein may be interpreted as "when", "upon" or "in response to determining".

Embodiments of the disclosure are described in detail below, examples of which are illustrated in the accompanying drawings, in which the same or similar reference numerals refer to the same or similar elements throughout. The embodiments described below with reference to the accompanying drawings are exemplary and are intended to be used to explain the disclosure, but should not be constructed as limiting the disclosure.

To facilitate understanding, terms involved in the present disclosure are first introduced.

### 1. Listen-before-talk (LBT)

LBT is a widely used technology in radio communications. Before starting transmission, a radio transmitter may first listen to its radio environment and detect whether a channel is idle. In response to detecting that the channel is idle, it is confirmed that the LBT is successful. In response to detecting that the channel is busy, it is confirmed that the LBT fails. In response to the channel being busy, it will wait for the channel to become idle before transmission, avoiding channel access conflicts and achieving channel spectrum sharing.

In order to better understand a reporting method disclosed in the embodiment of the present disclosure, the communication system to which the embodiment of the present disclosure is applicable is first described below.

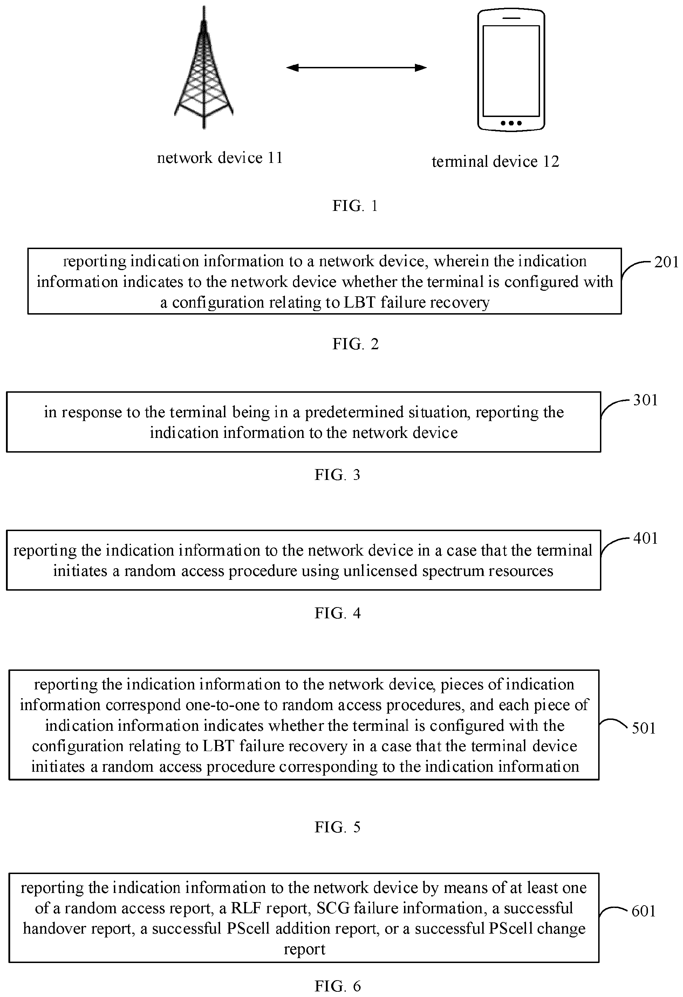

Please refer to FIG. 1, FIG. 1 is a structural diagram of a communication system provided by an embodiment of the disclosure. The communication system may include, but is not limited to, one network device and one terminal device. The number and the form of devices illustrated in FIG. 1 are only for examples and do not constitute a limitation on the embodiments of the disclosure. The communication system may include two or more network devices and two or more terminal devices in practical applications. The communication system as illustrated in FIG. 1 may include, for example, a network device 11 and a terminal device 12.

It is noteworthy that the technical solutions of the embodiments of the disclosure can be applied to various communication systems, such as, a long term evolution (LTE) system, a 5th generation (5G) mobile communication system, a 5G NR (new radio) system, or other future new mobile communication systems, etc.

The network device 11 in embodiments of the disclosure is an entity on a network side for transmitting or receiving signals. For example, the network device 11 may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network device are not limited in the embodiments of the disclosure. The network device according to embodiments of the disclosure may be composed of a central unit (CU) and distributed units (DUs). The CU may also be referred to as a control unit. The use of CU-DU structure allows to divide a protocol layer of the network device, such as a base station, such that some of the protocol layer functions are placed in the CU for centralized control, and some or all of the remaining protocol layer functions are distributed in the DUs, and the DUs are centrally controlled by the CU.

The terminal device 12 in embodiments of the disclosure is an entity on a user side for receiving or transmitting signals, such as a cellular phone. The terminal device may also be referred to as a terminal, a user equipment (UE), a mobile station (MS), a mobile terminal (MT), and the like. The terminal device can be a car with communication functions, a smart car, a mobile phone, a wearable device, a Pad, a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. The specific technology and specific device form adopted by the terminal device are not limited in embodiments of the present disclosure.

It is understandable that the communication system described in embodiments of the present disclosure is intended to clearly illustrate the technical solutions according to embodiments of the present disclosure, and does not constitute a limitation on the technical solutions according to embodiments of the present disclosure. It is understandable by those skilled in the art that as system architectures evolve and new business scenarios emerge, the technical solutions according to embodiments of the disclosure are also applicable to similar technical problems.

A reporting method/apparatus/device and a storage medium provided by embodiments of the present disclosure will be described in detail below with reference to the accompanying drawings.

FIG. 2 is a flowchart of a reporting method provided by an embodiment of the disclosure. The method is performed by a terminal. As illustrated in FIG. 2, the reporting method may include the following step.

At step 201, indication information is reported to a network device, in which, the indication information indicates to the network device whether the terminal is configured with a configuration relating to listen-before-talk (LBT) failure recovery.

The method of the disclosure may be applied in a new radio unlicensed (NR-U) system.

An example of the above "configuration relating to LBT failure recovery" is introduced.

Specifically, in some cases (such as the terminal uses unlicensed spectrum resources), before sending data, in order to avoid interference, the terminal is generally necessary to perform the LBT on current resources (such as a current bandwidth part (BWP) )), where only when the LBT is performed successfully, the terminal may start to use the current resources to send the data, and when the LBT continues to fail (that is, a count value of LBT failures reaches a predetermined threshold), the terminal cannot use the current resources to send the data. At this case, in response to the terminal being configured with the configuration relating to LBT failure recovery, the terminal may try to perform LBT failure recovery based on the configuration relating to LBT failure recovery, such as performing the LBT again on a new BWP, and stop performing the LBT failure recovery until the LBT is executed successfully and the terminal is able to successfully send the data, or until a count value of continued LBT failures reaches the predetermined threshold.

Further, in an embodiment of the present disclosure, the method for reporting the indication information to the network device to indicate to the network device whether the terminal is configured with the configuration relating to LBT failure recovery may include at least one of the followings.

A first method includes directly reporting to the network device indication information explicitly indicating whether the terminal is configured with the configuration relating to LBT failure recovery.

For example, the indication information may be a bit indicator code. The bit indicator code may include 2 bits. In a case that the bit indicator code is 00, it indicates that the terminal is configured with the configuration relating to LBT failure recovery, and in a case that the bit indicator code is 01, it indicates that the terminal is not configured with the configuration relating to LBT failure recovery.

It can be understood that the explicit indication in an embodiment of the present disclosure may include all explicit indication methods capable of being directly determined by the network device without using other calculation methods, including the above mentioned embodiment of indicating in bit form.

Based on this, the network device may clearly determine whether the terminal is configured with the configuration relating to LBT failure recovery by determining the received indication information reported by the terminal.

A second method includes, in response to the terminal being configured with the configuration relating to LBT failure recovery, reporting the indication information to the network device, the indication information including a content that the terminal is configured with the configuration relating to LBT failure recovery; in response to the terminal not being configured with the configuration relating to LBT failure recovery, not reporting indication information to the network device.

That is, in an embodiment of the present disclosure, only when the terminal is configured with the configuration relating to LBT failure recovery, the terminal reports to the network device the indication information indicating the content that the terminal is configured with the configuration relating to LBT failure recovery, and when the terminal is not configured with the configuration relating to LBT failure recovery, the terminal does not report the indication information to the network device. Thus, the network device may determine whether the terminal is configured with the configuration relating to LBT failure recovery by determining whether the network device receives the indication information.

A third method includes, in response to the terminal device being configured with the configuration relating to LBT failure recovery, reporting the indication information to the network device, in which, the indication information further indicates whether the terminal detects continued LBT failures (i.e., the indication information indicates that the terminal detects the continued LBT failures, or indicates that the terminal does not detect the continued LBT failures); in response to the terminal not being configured with the configuration relating to LBT failure recovery, not reporting indication information to the network device.

That is, in an embodiment of the present disclosure, only when the terminal device is configured with the configuration relating to LBT failure recovery, the terminal reports to the network device the indication information indicating whether the terminal detects the continued LBT failures, and when the terminal is not configured with the configuration relating to LBT failure recovery, the terminal does not report the indication information to the network device. The network device may determine whether the terminal is configured with the configuration relating to LBT failure recovery by determining whether the network device receives the indication information.

As can be seen from the above content, in the embodiments of the present disclosure, the terminal may report the indication information to the network device such that the network device knows whether the terminal is configured with the configuration relating to LBT failure recovery, and the network device may determine a count manner of the terminal for a count value of preamble transmitting failures based on "whether the terminal is configured with the configuration relating to LBT failure recovery". For example, in a case that the terminal is configured with the configuration relating to LBT failure recovery, it is determined that the count manner of the terminal for the count value of preamble transmitting failures is that: a preamble transmitting failure resulted by a LBT failure does not lead to an increase of a preamble transmission counter, PREAMBLE_TRANSMISSION_COUNTER, value. In a case that the terminal is not configured with the configuration relating to LBT failure recovery, it is determined that the count manner of the terminal for the count value of preamble transmitting failures is that: the preamble transmitting failure resulted by the LBT failure leads to an increase of the PREAMBLE_TRANSMISSION_COUNTER value. Therefore, in a case that the network device subsequently analyzes and locates the random access problem based on the count value of the preamble transmitting failures reported by the terminal, the network device may accurately analyze and locate the random access problem based on the count manner of the terminal for the count value of preamble transmitting failures together with the count value of the preamble transmitting failures reported by the terminal. Therefore, accurate optimization for the random access procedure may be guaranteed and a success rate of the random access procedure may be improved.

To sum up, in the reporting method provided by the embodiment of the present disclosure, the terminal reports the indication information to the network device, and the indication information indicates to the network device whether the terminal is configured with the configuration relating to LBT failure recovery. Thus, the network device may determine the count manner of the terminal for the count value of preamble transmitting failures based on "whether the terminal is configured with the configuration relating to LBT failure recovery". Then, in a case that the network device subsequently analyzes and locates the random access problem based on the count value of the preamble transmitting failures reported by the terminal, the network device may accurately analyze and locate the random access problem based on the count manner of the terminal for the count value of preamble transmitting failures together with the count value of the preamble transmitting failures reported by the terminal. Therefore, the accurate optimization for the random access procedure may be guaranteed and the success rate of the random access procedure may be improved.

FIG. 3 is a flowchart of a reporting method provided by an embodiment of the disclosure. The method is performed by a terminal. As illustrated in FIG. 3, the reporting method may include the following step.

At step 301, in response to the terminal being in a predetermined situation, the indication information is reported to the network device.

In an embodiment of the present disclosure, the predetermined situation may include at least one of followings:
the terminal being in random access failure while in a connected state (for example, in a case that the terminal is in the connected state, the terminal may need to re-trigger the random access procedure due to some causes (such as LBT failure or on demand system information (on demand SI), or other causes), but experience a failure of the re-triggered random access procedure);
the terminal being in random access success while in a connected state;
the terminal being in handover failure;
the terminal being in secondary cell group (SCG) addition failure;
the terminal being in SCG addition success;
the terminal being in SCG change failure;
the terminal being in SCG change success;
the terminal being in handover success;
the terminal being in SCG activation failure; or
the terminal being in random access procedure termination due to continued LBT failure.

Further, it is noted that, in an embodiment of the present disclosure, in response to the terminal terminating the random access procedure due to the continued LBT failures, the indication information reported by the terminal further indicates at least one of:
bandwidth part (BWP) related information (the BWP related information includes, for example, a BWP identifier (ID) and/or BWP locationAndBandwidth (location and bandwidth), etc.) associated with resources used in the terminated random access procedure;
random access information common (RA-InformationCommon) corresponding to the terminated random access procedure; or
a random access information list (perRAInfoList) corresponding to the terminated random access procedure.

For details on how the terminal reports the indication information, reference may be made to the description of the above embodiments.

To sum up, in the reporting method provided by the embodiment of the present disclosure, the terminal reports the indication information to the network device, and the indication information indicates to the network device whether the terminal is configured with the configuration relating to LBT failure recovery. Thus, the network device may determine a count manner of the terminal for a count value of preamble transmitting failures based on "whether the terminal is configured with the configuration relating to LBT failure recovery". Then, in a case that the network device subsequently analyzes and locates the random access problem based on the count value of the preamble transmitting failures reported by the terminal, the network device may accurately analyze and locate the random access problem based on the count manner of the terminal for the count value of preamble transmitting failures together with the count value of the preamble transmitting failures reported by the terminal. Therefore, accurate optimization for the random access procedure may be guaranteed and a success rate of the random access procedure may be improved.

FIG. 4 is a flowchart of a reporting method provided by an embodiment of the disclosure. The method is performed by a terminal. As illustrated in FIG. 4, the reporting method may include the following step.

At step 401, the indication information is reported to the network device in a case that the terminal initiates a random access procedure using unlicensed spectrum resources.

For details on how the terminal reports the indication information, reference may be made to the description of the above embodiments.

To sum up, in the reporting method provided by the embodiment of the present disclosure, the terminal reports the indication information to the network device, and the indication information indicates to the network device whether the terminal is configured with the configuration relating to LBT failure recovery. Thus, the network device may determine a count manner of the terminal for a count value of preamble transmitting failures based on "whether the terminal is configured with the configuration relating to LBT failure recovery". Then, in a case that the network device subsequently analyzes and locates the random access problem based on the count value of the preamble transmitting failures reported by the terminal, the network device may accurately analyze and locate the random access problem based on the count manner of the terminal for the count value of preamble transmitting failures together with the count value of the preamble transmitting failures reported by the terminal. Therefore, accurate optimization for the random access procedure may be guaranteed and a success rate of the random access procedure may be improved.

FIG. 5 is a flowchart of a reporting method provided by an embodiment of the disclosure. The method is performed by a terminal. As illustrated in FIG. 5, the reporting method may include the following step.

At step 501, the indication information is reported to the network device. Pieces of indication information correspond one-to-one to random access procedures, and each piece of indication information indicates whether the terminal is configured with the configuration relating to LBT failure recovery in a case that the terminal device initiates a random access procedure corresponding to the indication information.

For example, in an embodiment of the present disclosure, assumed that the terminal initiates two random access procedures in total, the terminal should report to the network device two pieces of indication information, such as indication information one and indication information two, respectively. The indication information one corresponds to a first random access procedure, and is configured to indicate whether the terminal is configured with the configuration relating to LBT failure recovery when initiating the first random access procedure, and the indication information two corresponds to a second random access procedure, and is configured to indicate whether the terminal is configured with the configuration relating to LBT failure recovery when initiating the second random access procedure. For a detailed introduction to the specific method of using the indication information one to indicate whether the terminal is configured with the configuration relating to LBT failure recovery when initiating the first random access procedure and the specific method of using the indication information two to indicate whether the terminal is configured with the configuration relating to LBT failure recovery when initiating the second random access procedure, reference may be made to the description of the above embodiments.

In an embodiment of the present disclosure, the above indication information may be carried in a perRAInfoList IE (random access information list information element) corresponding to the corresponding random access procedure.

In addition, other details about step 501 may refer to the description of the above embodiment.

To sum up, in the reporting method provided by the embodiment of the present disclosure, the terminal reports the indication information to the network device, and the indication information indicates to the network device whether the terminal is configured with the configuration relating to LBT failure recovery. Thus, the network device may determine a count manner of the terminal for a count value of preamble transmitting failures based on "whether the terminal is configured with the configuration relating to LBT failure recovery". Then, in a case that the network device subsequently analyzes and locates the random access problem based on the count value of the preamble transmitting failures reported by the terminal, the network device may accurately analyze and locate the random access problem based on the count manner of the terminal for the count value of preamble transmitting failures together with the count value of the preamble transmitting failures reported by the terminal. Therefore, accurate optimization for the random access procedure may be guaranteed and a success rate of the random access procedure may be improved.

FIG. 6 is a flowchart of a reporting method provided by an embodiment of the disclosure. The method is performed by a terminal. As illustrated in FIG. 6, the reporting method may include the following step.

At step 601, the indication information is reported to the network device by means of at least one of a random access report, a radio link failure (RLF) report, SCG failure information, a successful handover report, a successful primary secondary cell (PScell) addition report, or a successful PScell change report.

In an embodiment of the present disclosure, the above random access report is a report that needs to be reported due to successful random access. The above RLF report is a report that needs to be reported due to random access failure or handover failure. The above SCG failure information is a report that needs to be reported due to a SCG addition failure or a SCG change failure. The above successful handover report is a report that needs to be reported due to a successful handover. The above successful PScell addition report is a report that needs to be reported due to a successful PScell addition. The above successful PScell change report is a report that needs to be reported due to a successful PScell change.

In an embodiment of the present disclosure, the indication information may be carried in at least one of the random access report, the RLF report, the SCG failure information, the successful handover report, the successful PScell addition report, or the successful PScell change report to report to the network device.

Further, in an embodiment of the present disclosure, in a case that the terminal is configured with the configuration relating to LBT failure recovery, at least one of the random access report, the RLF report, the SCG failure information, the successful ha ndover report, the successful PScell addition report, or the successful PScell change report may carry instruction information explicitly indicating that the terminal is configured with the configuration relating to LBT failure recovery. In a case that the terminal is not configured with the configuration relating to LBT failure recovery, at least one of the random access report, the RLF report, the SCG failure information, the successful handover report, the successful PScell addition report, or the successful PScell change report may carry indication information explicitly indicating that the terminal is not configured with the configuration relating to LBT failure recovery.

Alternatively, in another embodiment of the present disclosure, in a case that the terminal is configured with the configuration relating to LBT failure recovery, at least one of the random access report, the RLF report, the SCG failure information, the successful handover report, the successful PScell addition report, or the successful PScell change report may carry instruction information indicating a content of the configuration relating to LBT failure recovery configured for the terminal. In a case that the terminal is not configured with the configuration relating to LBT failure recovery, at least one of the random access report, the RLF report, the SCG failure information, the successful handover report, the successful PScell addition report, or the successful PScell change report may not carry the indication information.

Alternatively, in another embodiment of the present disclosure, in a case that the terminal is configured with the configuration relating to LBT failure recovery, at least one of the random access report, the RLF report, the SCG failure information, the successful handover report, the successful PScell addition report, or the successful PScell change report may carry instruction information indicating whether the terminal detects continued LBT failures. In a case that the terminal is not configured with the configuration relating to LBT failure recovery, at least one of the random access report, the RLF report, the SCG failure information, the successful handover report, the successful PScell addition report, or the successful PScell change report may not carry the indication information.

To sum up, in the reporting method provided by the embodiment of the present disclosure, the terminal reports the indication information to the network device, and the indication information indicates to the network device whether the terminal is configured with the configuration relating to LBT failure recovery. Thus, the network device may determine a count manner of the terminal for a count value of preamble transmitting failures based on "whether the terminal is configured with the configuration relating to LBT failure recovery". Then, in a case that the network device subsequently analyzes and locates the random access problem based on the count value of the preamble transmitting failures reported by the terminal, the network dev ice may accurately analyze and locate the random access problem based on the count manner of the terminal for the count value of preamble transmitting failures together with the count value of the preamble transmitting failures reported by the terminal. Therefore, accurate optimization for the random access procedure may be guaranteed and a success rate of the random access procedure may be improved.

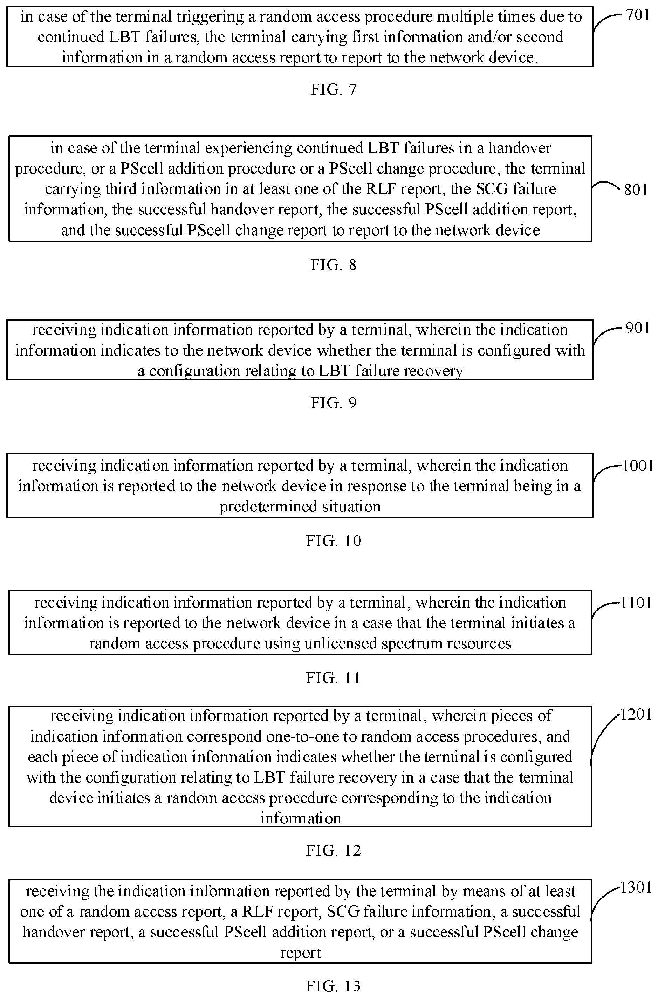

FIG. 7 is a flowchart of a reporting method provided by an embodiment of the disclosure. The method is performed by a terminal. As illustrated in FIG. 7, the reporting method may include the following step.

At step 701, in case of the terminal triggering a random access procedure multiple times due to continued LBT failures, the terminal carries first information and/or second information in a random access report to report to the network device.

It is noted that, in an embodiment of the present disclosure, in a case that a terminal experiences the continued LBT failures, it may be implicitly stated that the terminal is configured with the configuration relating to LBT failure recovery.

In an embodiment of the present disclosure, the random access report is reported to the network device after the terminal device succeeds in random access.

Further, in an embodiment of the present disclosure, the first information may include information related to a BWP that has been attempted in the random access procedure for LBT failure recovery before the terminal succeeds in random access. The second information may include BWP related information of a previous LBT failure of an earliest random access procedure triggered due to the continued LBT failures.

Specifically, in an embodiment of the present disclosure, for the terminal configured with the configuration relating to LBT failure recovery, in a case that the terminal is in the connected state, it may result in that the terminal cannot successfully transmit data under a current link due to continued LBT failures experienced on a BWP corresponding to the current link. At this case, the terminal may re-trigger the random access procedure to perform LBT failure recovery. During the re-triggered random access procedure, the terminal may try to perform LBT on a new BWP. In case of the LBT continuing to fail on the new BWP, the terminal may trigger the random access procedure again to perform the LBT failure recovery, and during the random access procedure triggered again, the terminal may also try to perform the LBT on another new BWP. In case of the LBT continuing to fail on another new BWP, the terminal may also trigger the random access procedure to perform the LBT failure recovery, and stop the random access procedure until the terminal succeeds in random access.

For example, assumed that the terminal experiences the continued LBT failure on BWP#1 corresponding to the current link, it means that the terminal cannot successfully transmit data on the current link. At this case, the terminal may trigger a first random access procedure to perform the LBT failure recovery. In the first random access procedure, the terminal tries to perform LBT on BWP#2. In a case that the terminal also experiences the continued LBT failure on BWP#2, it means that the first random access procedure has failed, the terminal may re-trigger the second random access procedure to perform the LBT failure recovery. In the second random access procedure, the terminal tries to perform the LBT on BWP#3. In a case that the terminal also experiences the continued LBT failure on BWP#3, it means that the second random access procedure has failed, and the terminal may re-trigger a third random access procedure to perform the LBT failure recovery. In the third random access procedure, the terminal tries to perform the LBT on BWP#4. In a case that the terminal does not experience the continued LBT failure on BWP#4 and successes in random access, the terminal may use resources on BWP#4 for transmission.

As can be known from the above that the terminal experiences the continued LBT failure on BWP#1, therefore, the terminal triggers the first random access procedure, which means that the first random access procedure is an earliest random access procedure triggered by the continued LBT failures, and the BWP#1 is a BWP corresponding to a previous continued LBT failure of the earliest random access procedure triggered due to the continued LBT failures. The terminal successes in random access in the third random access procedure, which means that the above first random access procedure and the above second random access procedure are both random access procedures for LBT failure recovery before the terminal successes in random access, and the BWP#2 attempted in the first random access procedure and the BWP#3 attempted in the second random access procedure are both information related to BWPs that have attempted in the random access procedures for LBT failure recovery before the terminal successes in random access.

Based on this, information related to BWP#1 (such as at least one of ID, location and bandwidth of BWP#1) may be determined as the second information, information related to BWP#2 and information related to BWP#3 may be determined as the first information, and the first information and the second information may be reported to the network device.

It can be seen from the above that in an embodiment of the present disclosure, the first information and the second information are actually: information related to the BWP that has experienced the continued LBT failures. Based on this, the terminal reports the first information and the second information to the network device such that the network device may avoid scheduling BWP information indicated by the first information and the second information for the terminal, which may avoid the subsequent continued LBT failures of the terminal and ensure a communication efficiency of the terminal.

To sum up, in the reporting method provided by the embodiment of the present disclosure, the terminal reports the indication information to the network device, and the indication information indicates to the network device whether the terminal is configured with the configuration relating to LBT failure recovery. Thus, the network device may determine a count manner of the terminal for a count value of preamble transmitting failures based on "whether the terminal is configured with the configuration relating to LBT failure recovery". Then, in a case that the network device subsequently analyzes and locates the random access problem based on the count value of the preamble transmitting failures reported by the terminal, the network device may accurately analyze and locate the random access problem based on the count manner of the terminal for the count value of preamble transmitting failures together with the count value of the preamble transmitting failures reported by the terminal. Therefore, accurate optimization for the random access procedure may be guaranteed and a success rate of the random access procedure may be improved.

FIG. 8 is a flowchart of a reporting method provided by an embodiment of the disclosure. The method is performed by a terminal. As illustrated in FIG. 8, the reporting method may include the following step.

At step 801, in case of the terminal experiencing continued LBT failures in a handover procedure, or a PScell addition procedure or a PScell change procedure, the terminal carries third information in at least one of the RLF report, the SCG failure information, the successful handover report, the successful PScell addition report, and the successful PScell change report to report to the network device.

In an embodiment of the present disclosure, during the handover procedure or the PScell addition procedure or the PScell change procedure, the terminal may have attempted LBT failure recovery on multiple BWPs, but multiple BWPs may experience the continued LBT failures, then the third information may include information related to at least one BWP in which the continued LBT failures have been experienced during the handover procedure, the PScell addition procedure, or the PScell change procedure.

To sum up, in the reporting method provided by the embodiment of the present disclosure, the terminal reports the indication information to the network device, and the indication information indicates to the network device whether the terminal is configured with the configuration relating to LBT failure recovery. Thus, the network device may determine a count manner of the terminal for a count value of preamble transmitting failures based on "whether the terminal is configured with the configuration relating to LBT failure recovery". Then, in a case that the network device subsequently analyzes and locates the random access problem based on the count value of the preamble transmitting failures reported by the terminal, the network device may accurately analyze and locate the random access problem based on the count manner of the terminal for the count value of preamble transmitting failures together with the count value of the preamble transmitting failures reported by the terminal. Therefore, accurate optimization for the random access procedure may be guaranteed and a success rate of the random access procedure may be improved.

FIG. 9 is a flowchart of a reporting method provided by an embodiment of the disclosure. The method is performed by a network device. As illustrated in FIG. 9, the reporting method may include the following step.

At step 901, indication information reported by a terminal is received, in which, the indication information indicates to the network device whether the terminal is configured with a configuration relating to LBT failure recovery.

In an embodiment of the present disclosure, the network device may determine whether the terminal is configured with the configuration relating to LBT failure recovery by receiving the indication information reported by the terminal. Specifically, the method for the network device to determine whether the terminal is configured with the configuration relating to LBT failure recovery may include at least one of the following.

A first method includes receiving indication information explicitly indicating whether the terminal is configured with the configuration relating to LBT failure recovery, reported by the terminal, and directly determining whether the terminal is configured with the configuration relating to LBT failure recovery based on the indication information.

A second method includes, in response to the network device receiving the indication information, and the indication information comprising a content that the terminal is configured with the configuration relating to LBT failure recovery, determining that the terminal is configured with the configuration relating to LBT failure recovery; in response to the network device failing to receive the indication information, determining that the terminal is not configured with the configuration relating to LBT failure recovery.

A third method includes, in response to the network device receiving the indication information, and the indication information further indicating whether the terminal detects continued LBT failures, determining that the terminal is configured with the configuration relating to LBT failure recovery; in response to the network device failing to receive the indication information, determining that the terminal is not configured with the configuration relating to LBT failure recovery.

Detailed introduction to step 901 may refer to the description of the above embodiment.

To sum up, in the reporting method provided by the embodiment of the present disclosure, the network device receives the indication information reported by the terminal, the indication information indicates to the network device whether the terminal is configured with the configuration relating to LBT failure recovery. Thus, the network device may determine a count manner of the terminal for a count value of preamble transmitting failures based on "whether the terminal is configured with the configuration relating to LBT failure recovery". Then, in a case that the network device subsequently analyzes and locates the random access problem based on the count value of the preamble transmitting failures reported by the terminal, the network device may accurately analyze and locate the random access problem based on the count manner of the terminal for the count value of preamble transmitting failures together with the count value of the preamble transmitting failures reported by the terminal. Therefore, accurate optimization for the random access procedure may be guaranteed and a success rate of the random access procedure may be improved.

FIG. 10 is a flowchart of a reporting method provided by an embodiment of the disclosure. The method is performed by a network device. As illustrated in FIG. 10, the reporting method may include the following step.

At step 1001, indication information reported by a terminal is received, in which, the indication information is reported to the network device in response to the terminal being in a predetermined situation.

Detailed introduction to step 1001 may refer to the description of the above embodiment.

To sum up, in the reporting method provided by the embodiment of the present disclosure, the network device receives the indication information reported by the terminal, the indication information indicates to the network device whether the terminal is configured with the configuration relating to LBT failure recovery. Thus, the network device may determine a count manner of the terminal for a count value of preamble transmitting failures based on "whether the terminal is configured with the configuration relating to LBT failure recovery". Then, in a case that the network device subsequently analyzes and locates the random access problem based on the count value of the preamble transmitting failures reported by the terminal, the network device may accurately analyze and locate the random access problem based on the count manner of the terminal for the count value of preamble transmitting failures together with the count value of the preamble transmitting failures reported by the terminal. Therefore, accurate optimization for the random access procedure may be guaranteed and a success rate of the random access procedure may be improved.

FIG. 11 is a flowchart of a reporting method provided by an embodiment of the disclosure. The method is performed by a network device. As illustrated in FIG. 11, the reporting method may include the following step.

At step 1101, indication information reported by a terminal is received, in which, the indication information is reported to the network device in a case that the terminal initiates a random access procedure using unlicensed spectrum resources.

Detailed introduction to step 1101 may refer to the description of the above embodiment.

To sum up, in the reporting method provided by the embodiment of the present disclosure, the network device receives the indication information reported by the terminal, the indication information indicates to the network device whether the terminal is configured with the configuration relating to LBT failure recovery. Thus, the network device may determine a count manner of the terminal for a count value of preamble transmitting failures based on "whether the terminal is configured with the configuration relating to LBT failure recovery". Then, in a case that the network device subsequently analyzes and locates the random access problem based on the count value of the preamble transmitting failures reported by the terminal, the network device may accurately analyze and locate the random access problem based on the count manner of the terminal for the count value of preamble transmitting failures together with the count value of the preamble transmitting failures reported by the terminal. Therefore, accurate optimization for the random access procedure may be guaranteed and a success rate of the random access procedure may be improved.

FIG. 12 is a flowchart of a reporting method provided by an embodiment of the disclosure. The method is performed by a network device. As illustrated in FIG. 12, the reporting method may include the following step.

At step 1201, indication information reported by a terminal is received, in which, pieces of indication information correspond one-to-one to random access procedures, and each piece of indication information indicates whether the terminal is configured with the configuration relating to LBT failure recovery in a case that the terminal device initiates a random access procedure corresponding to the indication information.

Detailed introduction to step 1201 may refer to the description of the above embodiment.

To sum up, in the reporting method provided by the embodiment of the present disclosure, the network device receives the indication information reported by the terminal, the indication information indicates to the network device whether the terminal is configured with the configuration relating to LBT failure recovery. Thus, the network device may determine a count manner of the terminal for a count value of preamble transmitting failures based on "whether the terminal is configured with the configuration relating to LBT failure recovery". Then, in a case that the network device subsequently analyzes and locates the random access problem based on the count value of the preamble transmitting failures reported by the terminal, the network device may accurately analyze and locate the random access problem based on the count manner of the terminal for the count value of preamble transmitting failures together with the count value of the preamble transmitting failures reported by the terminal. Therefore, accurate optimization for the random access procedure may be guaranteed and a success rate of the random access procedure may be improved.

FIG. 13 is a flowchart of a reporting method provided by an embodiment of the disclosure. The method is performed by a network device. As illustrated in FIG. 13, the reporting method may include the following step.

At step 1301, the indication information reported by the terminal by means of at least one of a random access report, a RLF report, SCG failure information, a successful handover report, a successful PScell addition report, or a successful PScell change report is received.

Detailed introduction to step 1301 may refer to the description of the above embodiment.

To sum up, in the reporting method provided by the embodiment of the present disclosure, the network device receives the indication information reported by the terminal, the indication information indicates to the network device whether the terminal is configured with the configuration relating to LBT failure recovery. Thus, the network device may determine a count manner of the terminal for a count value of preamble transmitting failures based on "whether the terminal is configured with the configuration relating to LBT failure recovery". Then, in a case that the network device subsequently analyzes and locates the random access problem based on the count value of the preamble transmitting failures reported by the terminal, the network device may accurately analyze and locate the random access problem based on the count manner of the terminal for the count value of preamble transmitting failures together with the count value of the preamble transmitting failures reported by the terminal. Therefore, accurate optimization for the random access procedure may be guaranteed and a success rate of the random access procedure may be improved.

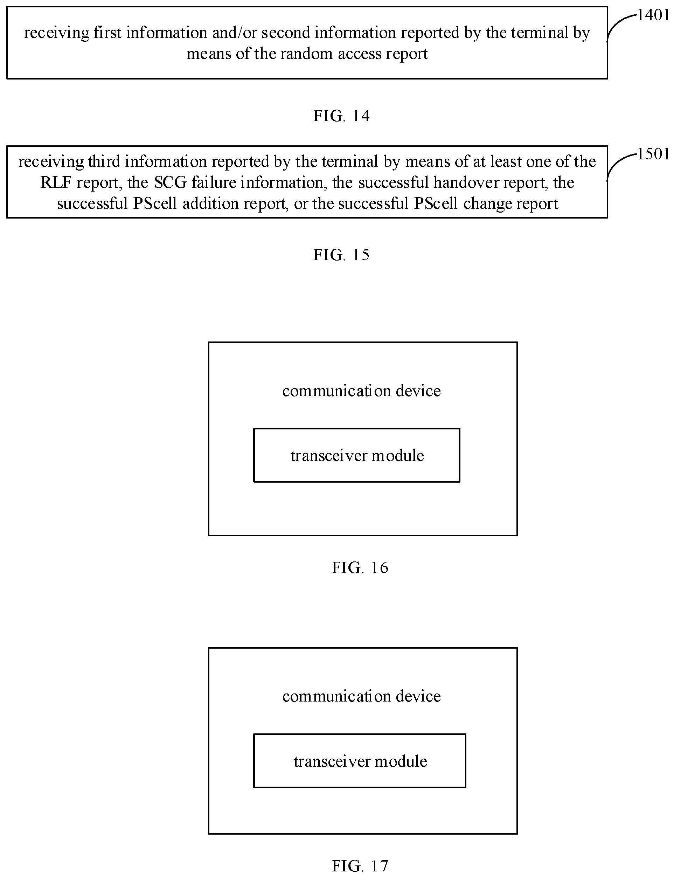

FIG. 14 is a flowchart of a reporting method provided by an embodiment of the disclosure. The method is performed by a network device. As illustrated in FIG. 14, the reporting method may include the following step.

At step 1401, first information and/or second information reported by the terminal by means of the random access report is received.

Detailed introduction to step 1401 may refer to the description of the above embodiment.

To sum up, in the reporting method provided by the embodiment of the present disclosure, the network device receives the indication information reported by the terminal, the indication information indicates to the network device whether the terminal is configured with the configuration relating to LBT failure recovery. Thus, the network device may determine a count manner of the terminal for a count value of preamble transmitting failures based on "whether the terminal is configured with the configuration relating to LBT failure recovery". Then, in a case that the network device subsequently analyzes and locates the random access problem based on the count value of the preamble transmitting failures reported by the terminal, the network device may accurately analyze and locate the random access problem based on the count manner of the terminal for the count value of preamble transmitting failures together with the count value of the preamble transmitting failures reported by the terminal. Therefore, accurate optimization for the random access procedure may be guaranteed and a success rate of the random access procedure may be improved.

FIG. 15 is a flowchart of a reporting method provided by an embodiment of the disclosure. The method is performed by a network device. As illustrated in FIG. 15, the reporting method may include the following step.

At step 1501, third information reported by the terminal by means of at least one of the RLF report, the SCG failure information, the successful handover report, the successful PScell addition report, or the successful PScell change report is received.

Detailed introduction to step 1501 may refer to the description of the above embodiment.

To sum up, in the reporting method provided by the embodiment of the present disclosure, the network device receives the indication information reported by the terminal, the indication information indicates to the network device whether the terminal is configured with the configuration relating to LBT failure recovery. Thus, the network device may determine a count manner of the terminal for a count value of preamble transmitting failures based on "whether the terminal is configured with the configuration relating to LBT failure recovery". Then, in a case that the network device subsequently analyzes and locates the random access problem based on the count value of the preamble transmitting failures reported by the terminal, the network device may accurately analyze and locate the random access problem based on the count manner of the terminal for the count value of preamble transmitting failures together with the count value of the preamble transmitting failures reported by the terminal. Therefore, accurate optimization for the random access procedure may be guaranteed and a success rate of the random access procedure may be improved.

FIG. 16 is a structural diagram of a communication device provided by an embodiment of the disclosure. As illustrated in FIG. 16, the device may include:

a transceiver module, configured to report indication information to a network device, in which, the indication information indicates to the network device whether the terminal is configured with a configuration relating to listen-before-talk (LBT) failure recovery.

To sum up, in the communication device provided by the embodiment of the present disclosure, the terminal reports the indication information to the network device, and the indication information indicates to the network device whether the terminal is configured with the configuration relating to LBT failure recovery. Thus, the network device may determine a count manner of the terminal for a count value of preamble transmitting failures based on "whether the terminal is configured with the configuration relating to LBT failure recovery". Then, in a case that the network device subsequently analyzes and locates the random access problem based on the count value of the preamble transmitting failures reported by the terminal, the network device may accurately analyze and locate the random access problem based on the count manner of the terminal for the count value of preamble transmitting failures together with the count value of the preamble transmitting failures reported by the terminal. Therefore, accurate optimization for the random access procedure may be guaranteed and a success rate of the random access procedure may be improved.

Optionally, in an embodiment of the present disclosure, the transceiver module is further configured to:
report to the network device indication information explicitly indicating whether the terminal is configured with the configuration relating to LBT failure recovery.

Optionally, in an embodiment of the present disclosure, the transceiver module is further configured to:
in response to the terminal being configured with the configuration relating to LBT failure recovery, report the indication information to the network device, the indication information including a content that the terminal is configured with the configuration relating to LBT failure recovery;
in response to the terminal not being configured with the configuration relating to LBT failure recovery, not report indication information to the network device.

Optionally, in an embodiment of the present disclosure, the transceiver module is further configured to:
in response to the terminal device being configured with the configuration relating to LBT failure recovery, report the indication information to the network device, in which, the indication information further indicates whether the terminal detects continued LBT failures;
in response to the terminal not being configured with the configuration relating to LBT failure recovery, not report indication information to the network device.

Optionally, in an embodiment of the present disclosure, the transceiver module is further configured to:
in response to the terminal being in a predetermined situation, report the indication information to the network device, in which the predetermined situation includes at least one of followings:
the terminal being in random access failure while in a connected state;
the terminal being in random access success while in a connected state;
the terminal being in handover failure;
the terminal being in secondary cell group (SCG) addition failure;
the terminal being in SCG addition success;
the terminal being in SCG change failure;
the terminal being in SCG change success;
the terminal being in handover success;
the terminal being in SCG activation failure; or
the terminal being in random access procedure termination due to continued LBT failure.

Optionally, in an embodiment of the present disclosure, in response to the terminal terminating the random access procedure due to the continued LBT failures, the indication information reported by the terminal further indicates at least one of:
bandwidth part (BWP) related information associated with resources used in the terminated random access procedure;
random access information common, RA-InformationCommon, corresponding to the terminated random access procedure; or
a random access information list, perRAInfoList, corresponding to the terminated random access procedure.

Optionally, in an embodiment of the present disclosure, the transceiver module is further configured to:
report the indication information to the network device in a case that the terminal initiates a random access procedure using unlicensed spectrum resources.

Optionally, in an embodiment of the present disclosure, pieces of indication information correspond one-to-one to random access procedures, and each piece of indication information indicates whether the terminal is configured with the configuration relating to LBT failure recovery in a case that the terminal device initiates a random access procedure corresponding to the indication information.

Optionally, in an embodiment of the present disclosure, the transceiver module is further configured to:
report the indication information to the network device by means of at least one of a random access report, a radio link failure (RLF) report, SCG failure information, a successful handover report, a successful primary secondary cell (PScell) addition report, and a successful PScell change report.

Optionally, in an embodiment of the present disclosure, the random access report is reported to the network device after the terminal device succeeds in random access;
in response to the terminal reporting the indication information to the network device by means of the random access report, in case of the terminal triggering a random access procedure multiple times due to continued LBT failures, the random access report further includes at least one of:
first information comprising information related to a BWP that has been attempted in the random access procedure for LBT failure recovery before the terminal succeeds in random access; or
second information comprising BWP related information of a previous LBT failure of an earliest random access procedure triggered due to the continued LBT failures.

Optionally, in an embodiment of the present disclosure, in response to the terminal reporting the indication information to the network device by means of at least one of the RLF report, the SCG failure information, the successful handover report, the successful PScell addition report, or the successful PScell change report, in case of the terminal experiencing continued LBT failures in a handover procedure, or a PScell addition procedure or a PScell change procedure, at least one of the RLF report, the SCG failure information, the successful handover report, the successful PScell addition report, or the successful PScell change report further includes third information, the third information includes information related to at least one BWP in which the continued LBT failures have been experienced during the handover procedure, the PScell addition procedure, or the PScell change procedure.

FIG. 17 is a structural diagram of a communication device provided by an embodiment of the disclosure. As illustrated in FIG. 17, the device may include:
a transceiver module, configured to receive indication information reported by a terminal, in which, the indication information indicates to the network device whether the terminal is configured with a configuration relating to listen-before-talk (LBT) failure recovery.

To sum up, in the communication device provided by the embodiment of the present disclosure, the network device receives the indication information reported by the terminal, the indication information indicates to the network device whether the terminal is configured with the configuration relating to LBT failure recovery. Thus, the network device may determine a count manner of the terminal for a count value of preamble transmitting failures based on "whether the terminal is configured with the configuration relating to LBT failure recovery". Then, in a case that the network device subsequently analyzes and locates the random access problem based on the count value of the preamble transmitting failures reported by the terminal, the network device may accurately analyze and locate the random access problem based on the count manner of the terminal for the count value of preamble transmitting failures together with the count value of the preamble transmitting failures reported by the terminal. Therefore, accurate optimization for the random access procedure may be guaranteed and a success rate of the random access procedure may be improved.

Optionally, in an embodiment of the present disclosure, the transceiver module is further configured to:
receive indication information explicitly indicating whether the terminal is configured with the configuration relating to LBT failure recovery, reported by the terminal.

Optionally, in an embodiment of the present disclosure, the device is further configured to:
in response to the network device receiving the indication information, and the indication information including a content that the terminal is configured with the configuration relating to LBT failure recovery, determine that the terminal is configured with the configuration relating to LBT failure recovery;
in response to the network device failing to receive the indication information, determine that the terminal is not configured with the configuration relating to LBT failure recovery.

Optionally, in an embodiment of the present disclosure, the device is further configured to:
in response to the network device receiving the indication information, and the indication information further indicating whether the terminal detects continued LBT failures, determine that the terminal is configured with the configuration relating to LBT failure recovery;
in response to the network device failing to receive the indication information, determine that the terminal is not configured with the configuration relating to LBT failure recovery.

Optionally, in an embodiment of the present disclosure, the indication information is reported to the network device in response to the terminal being in a predetermined situation; the predetermined situation includes at least one of followings:
the terminal being in random access failure while in a connected state;
the terminal being in random access success while in a connected state;
the terminal being in handover failure;
the terminal being in secondary cell group (SCG) addition failure;
the terminal being in SCG addition success;
the terminal being in SCG change failure;
the terminal being in SCG change success;
the terminal being in handover success;
the terminal being in SCG activation failure; or
the terminal being in random access procedure termination due to continued LBT failure.

Optionally, in an embodiment of the present disclosure, in response to the terminal terminating the random access procedure due to the continued LBT failures, the indication information reported by the terminal further indicates at least one of:
BWP related information associated with resources used in the terminated random access procedure;
RA-InformationCommon corresponding to the terminated random access procedure; or
perRAInfoList corresponding to the terminated random access procedure.

Optionally, in an embodiment of the present disclosure, the indication information is reported to the network device in a case that the terminal initiates a random access procedure using unlicensed spectrum resources.

Optionally, in an embodiment of the present disclosure, pieces of indication information correspond one-to-one to random access procedures, and each piece of indication information indicates whether the terminal is configured with the configuration relating to LBT failure recovery in a case that the terminal device initiates a random access procedure corresponding to the indication information.

Optionally, in an embodiment of the present disclosure, the transceiver module is further configured to:
receive the indication information reported by the terminal by means of at least one of a random access report, a RLF report, SCG failure information, a successful handover report, a successful PScell addition report, or a successful PScell change report.

Optionally, in an embodiment of the present disclosure, in response to the indication information being reported to the network device by the terminal device by means of the random access report, the random access report further includes at least one of:
first information comprising information related to a BWP that has been attempted in the random access procedure for LBT failure recovery before the terminal succeeds in random access; or
second information comprising BWP related information of a previous LBT failure of an earliest random access procedure triggered due to the continued LBT failures.

Optionally, in an embodiment of the present disclosure, in response to the terminal reporting the indication information to the network device by means of at least one of the RLF report, the SCG failure information, the successful handover report, the successful PScell addition report, or the successful PScell change report, in case of the terminal experiencing continued LBT failures in a handover procedure, or a PScell addition procedure or a PScell change procedure, at least one of the RLF report, the SCG failure information, the successful handover report, the successful PScell addition report, or the successful PScell change report further includes third information, the third information includes information related to at least one BWP in which the continued LBT failures have been experienced during the handover procedure, the PScell addition procedure, or the PScell change procedure.

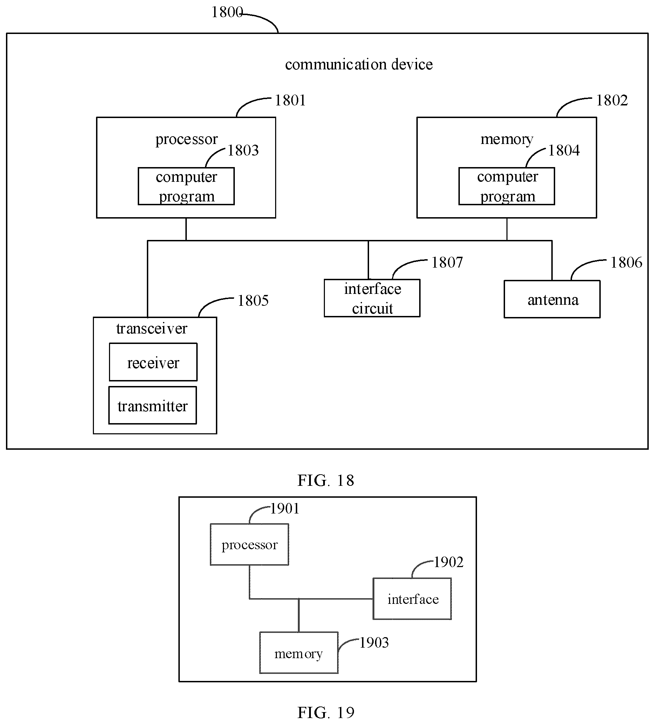

Please refer to FIG. 18, FIG. 18 is a structural diagram of a communication device 1800 provided by an embodiment of the disclosure. The communication device 1800 may be a network device or a terminal device, or may be a chip, a chip system or a processor that supports the network device to realize the above-described methods, or may be a chip, a chip system or a processor that supports the terminal device to realize the above-described methods. The communication device may be used to realize the methods described in the above method embodiments with reference to the description of the above-described method embodiments.

The communication device 1800 may include one or more processors 1801. The processor 1801 may be a general purpose processor or a dedicated processor, such as, a baseband processor and a central processor. The baseband processor is used for processing communication protocols and communication data. The central processor is used for controlling the communication device (e.g., a base station, a baseband chip, a terminal device, a terminal device chip, a DU, or a CU), executing computer programs, and processing data of the computer programs.

Optionally, the communication device 1800 may include one or more memories 1802 on which computer programs 1804 may be stored. The processor 1801 executes the computer programs 1804 to cause the communication device 1800 to perform the methods described in the above method embodiments. Optionally, the memory 1802 may also store data. The communication device 1800 and the memory 1802 may be provided separately or may be integrated together.

Optionally, the communication device 1800 may also include a transceiver 1805 and an antenna 1806. The transceiver 1805 may be referred to as a transceiver unit, a transceiver machine, or a transceiver circuit, for realizing a transceiver function. The transceiver 1805 may include a receiver and a transmitter. The receiver may be referred to as a receiving machine or a receiving circuit, for realizing the receiving function. The transmitter may be referred to as a transmitter machine or a transmitting circuit, for realizing the transmitting function.

Optionally, the communication device 1800 may also include one or more interface circuits 1807. The interface circuits 1807 are used to receive code instructions and transmit them to the processor 1801. The processor 1801 runs the code instructions to cause the communication device 1800 to perform the method described in the method embodiments.

In an implementation, the processor 1801 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor 1801 may store a computer program 1803. The processor 1801 runs the computer program 1803 to cause the communication device 1800 to perform the methods described in the method embodiments above. The computer program 1803 may be solidified in the processor 1801, and in such case the processor 1801 may be implemented by hardware.

In an implementation, the communication device 1800 may include circuits. The circuits may implement the sending, receiving or communicating function in the preceding method embodiments. The processor and the transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver are produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a network device or a terminal device, but the scope of the communication device described in the disclosure is not limited thereto, and the structure of the communication device may not be limited by FIG. 18. The communication device may be a stand-alone device or may be part of a larger device. For example, the described communication device may be:
(1) a stand-alone integrated circuit (IC), a chip, a chip system or subsystem;
(2) a set of ICs including one or more ICs, optionally, the set of ICs may also include storage components for storing data and a computer program;
(3) an ASIC, such as a modem;
(4) a module that can be embedded within other devices;
(5) a receiver, a terminal device, a smart terminal device, a cellular phone, a wireless device, a handheld machine, a mobile unit, an in-vehicle device, a network device, a cloud device, an artificial intelligence device, and the like; and
(6) others.

For a case where the communication device is a chip or a chip system, reference may be made to a structural diagram of a chip as illustrated in FIG. 19. The chip illustrated in FIG. 19 includes a processor 1901 and an interface 1902. There may be may be one or more processors 1901, and a plurality of interfaces 1902.

Optionally, the chip further includes a memory 1903, the memory 1903 is configured to store necessary computer programs and data.

It is understood by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be understood as beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understand that "first", "second", or other various numerical numbers involved in the disclosure are only described for the convenience of differentiation, and are not used to limit the scope of the embodiments of the disclosure, or used to indicate the order of precedence.

The term "at least one" in the disclosure may also be described as one or more, and the term "more" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that can be understood by the communication device, and the values or representations of the parameters may be other values or representations that can be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, pre-define, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can be referred to the corresponding processes in the preceding method embodiments, and will not be repeated herein.

The above are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A reporting method, performed by a terminal, comprising:
reporting indication information to a network device, wherein the indication information indicates to the network device whether the terminal is configured with a configuration relating to listen-before-talk (LBT) failure recovery.

2. The method of claim 1, wherein reporting the indication information to the network device comprises:
reporting to the network device indication information explicitly indicating whether the terminal is configured with the configuration relating to LBT failure recovery.

3. The method of claim 1, further comprising:
in response to the terminal being configured with the configuration relating to LBT failure recovery, reporting the indication information to the network device, the indication information comprising a content that the terminal is configured with the configuration relating to LBT failure recovery;
in response to the terminal not being configured with the configuration relating to LBT failure recovery, not reporting indication information to the network device.

4. The method of claim 1, further comprising:
in response to the terminal device being configured with the configuration relating to LBT failure recovery, reporting the indication information to the network device, wherein the indication information further indicates whether the terminal detects continued LBT failures;
in response to the terminal not being configured with the configuration relating to LBT failure recovery, not reporting indication information to the network device.

5. The method of any one of claims 1 to 4, wherein reporting the indication information to the network device comprises:
in response to the terminal being in a predetermined situation, reporting the indication information to the network device, wherein the predetermined situation comprises at least one of followings:
the terminal being in random access failure while in a connected state;
the terminal being in random access success while in a connected state;
the terminal being in handover failure;
the terminal being in secondary cell group (SCG) addition failure;
the terminal being in SCG addition success;
the terminal being in SCG change failure;
the terminal being in SCG change success;
the terminal being in handover success;
the terminal being in SCG activation failure; or
the terminal being in a random access procedure termination due to continued LBT failure.

6. The method of claim 5, wherein in response to the terminal terminating the random access procedure due to the continued LBT failures, the indication information reported by the terminal further indicates at least one of:
bandwidth part (BWP) related information associated with resources used in the terminated random access procedure;
random access information common, RA-InformationCommon, corresponding to the terminated random access procedure; or
a random access information list, perRAInfoList, corresponding to the terminated random access procedure.

7. The method of any one of claims 1 to 4, wherein reporting the indication information to the network device comprises:
reporting the indication information to the network device in a case that the terminal initiates a random access procedure using unlicensed spectrum resources.

8. The method of any one of claims 1 to 4, wherein pieces of indication information correspond one-to-one to random access procedures, and each piece of indication information indicates whether the terminal is configured with the configuration relating to LBT failure recovery in a case that the terminal device initiates a random access procedure corresponding to the indication information.

9. The method of any one of claims 1 to 4, wherein reporting the indication information to the network device comprises:
reporting the indication information to the network device by means of at least one of a random access report, a radio link failure (RLF) report, SCG failure information, a successful handover report, a successful primary secondary cell (PScell) addition report, or a successful PScell change report.

10. The method of claim 9, wherein the random access report is reported to the network device after the terminal device succeeds in random access;
in response to the terminal reporting the indication information to the network device by means of the random access report, in case of the terminal triggering a random access procedure multiple times due to continued LBT failures, the random access report further comprises at least one of:
first information comprising information related to a BWP that has been attempted in the random access procedure for LBT failure recovery before the terminal succeeds in random access; or
second information comprising BWP related information of a previous LBT failure of an earliest random access procedure triggered due to the continued LBT failures.

11. The method of claim 9, wherein in response to the terminal reporting the indication information to the network device by means of at least one of the RLF report, the SCG failure information, the successful handover report, the successful PScell addition report, or the successful PScell change report, in case of the terminal experiencing continued LBT failures in a handover procedure, or a PScell addition procedure or a PScell change procedure, at least one of the RLF report, the SCG failure information, the successful handover report, the successful PScell addition report, or the successful PScell change report further comprises third information, the third information comprises information related to at least one BWP in which the continued LBT failures have been experienced during the handover procedure, the PScell addition procedure, or the PScell change procedure.

12. A reporting method, performed by a network device, comprising:
receiving indication information reported by a terminal, wherein the indication information indicates to the network device whether the terminal is configured with a configuration relating to listen-before-talk (LBT) failure recovery.

13. The method of claim 12, wherein receiving the indication information reported by the terminal comprises:
receiving indication information explicitly indicating whether the terminal is configured with the configuration relating to LBT failure recovery, reported by the terminal.

14. The method of claim 12, further comprising:
in response to the network device receiving the indication information, and the indication information comprising a content that the terminal is configured with the configuration relating to LBT failure recovery, determining that the terminal is configured with the configuration relating to LBT failure recovery;
in response to the network device failing to receive the indication information, determining that the terminal is not configured with the configuration relating to LBT failure recovery.

15. The method of claim 12, further comprising:
in response to the network device receiving the indication information, and the indication information further indicating whether the terminal detects continued LBT failures, determining that the terminal is configured with the configuration relating to LBT failure recovery;
in response to the network device failing to receive the indication information, determining that the terminal is not configured with the configuration relating to LBT failure recovery.

16. The method of any one of claims 12 to 15, wherein the indication information is reported to the network device in response to the terminal being in a predetermined situation; the predetermined situation comprises at least one of followings:
the terminal being in random access failure while in a connected state;
the terminal being in random access success while in a connected state;
the terminal being in handover failure;
the terminal being in secondary cell group (SCG) addition failure;
the terminal being in SCG addition success;
the terminal being in SCG change failure;
the terminal being in SCG change success;
the terminal being in handover success;
the terminal being in SCG activation failure; or
the terminal being in random access procedure termination due to continued LBT failure.

17. The method of claim 16, wherein in response to the terminal terminating the random access procedure due to the continued LBT failures, the indication information reported by the terminal further indicates at least one of:
BWP related information associated with resources used in the terminated random access procedure;
RA-InformationCommon corresponding to the terminated random access procedure; or
perRAInfoList corresponding to the terminated random access procedure.

18. The method of any one of claims 12 to 15, wherein the indication information is reported to the network device in a case that the terminal initiates a random access procedure using unlicensed spectrum resources.

19. The method of any one of claims 12 to 15, wherein pieces of indication information correspond one-to-one to random access procedures, and each piece of indication information indicates whether the terminal is configured with the configuration relating to LBT failure recovery in a case that the terminal device initiates a random access procedure corresponding to the indication information.

20. The method of any one of claims 12 to 15, wherein receiving the indication information reported by the terminal comprises:
receiving the indication information reported by the terminal by means of at least one of a random access report, a RLF report, SCG failure information, a successful handover report, a successful PScell addition report, or a successful PScell change report.

21. The method of claim 20, wherein in response to the indication information being reported to the network device by the terminal device by means of the random access report, the random access report further comprises at least one of:
first information comprising information related to a BWP that has been attempted in the random access procedure for LBT failure recovery before the terminal succeeds in random access; or
second information comprising BWP related information of a previous LBT failure of an earliest random access procedure triggered due to the continued LBT failures.

22. The method of claim 20, wherein in response to the terminal reporting the indication information to the network device by means of at least one of the RLF report, the SCG failure information, the successful handover report, the successful PScell addition report, or the successful PScell change report, in case of the terminal experiencing continued LBT failures in a handover procedure, or a PScell addition procedure or a PScell change procedure, at least one of the RLF report, the SCG failure information, the successful handover report, the successful PScell addition report, or the successful PScell change report further comprises third information, the third information comprises information related to at least one BWP in which the continued LBT failures have been experienced during the handover procedure, the PScell addition procedure, or the PScell change procedure.

23. A communication device, configured in a terminal, comprising:
a transceiver module, configured to report indication information to a network device, wherein the indication information indicates to the network device whether the terminal is configured with a configuration relating to listen-before-talk (LBT) failure recovery.

24. A communication device, configured in a network device, comprising:
a transceiver module, configured to receive indication information reported by a terminal, wherein the indication information indicates to the network device whether the terminal is configured with a configuration relating to listen-before-talk (LBT) failure recovery.

25. A communication device, comprising a processor and a memory having a computer program stored thereon, wherein the processor performs the computer program stored in the memory causing the device to perform the method according to any one of claims 1 to 11, or the processor performs the computer program stored in the memory causing the device to perform the method according to any one of claims 12 to 22.

26. A communication device, comprising: a processor and an interface circuit, wherein
the interface circuit is configured to receive code instructions and transmit the code instructions to the processor; and
the processor is configured to run the code instructions to execute the method according to any one of claims 1 to 11, or is configured to run the code instructions to execute the method according to any one of claims 12 to 22.

27. A computer-readable storage medium for storing instructions, which, when executed, causes the method according to any one of claims 1 to 11 to be implemented, or, when executed, causes the method according to any one of claims 12 to 22 to be implemented.
